# EUROPEAN PATENT APPLICATION

(11) **EP 4 836 022 A1**
(43) Date of publication of application: **04.11.2026**
(21) Application number: 24915094.7
(22) Date of filing: 13.12.2024
(51) Int. Cl.: H01M 4/62, H01M 4/36

(54) **ELECTRODE ASSEMBLY AND PREPARATION METHOD THEREFOR, BATTERY CELL, BATTERY AND ELECTRICAL APPARATUS**

(30) Priority: 03.01.2024 CN 202410007450
(71) Applicant: Contemporary Amperex Technology Co., Limited, Ningde, Fujian 352100 (CN)
(72) Inventor: BAI, Wenlong, Ningde, Fujian 352100 (CN); LI, Qi, Ningde, Fujian 352100 (CN); ZHENG, Wei, Ningde, Fujian 352100 (CN); YOU, Xingyan, Ningde, Fujian 352100 (CN); YE, Yonghuang, Ningde, Fujian 352100 (CN); WU, Baozhen, Ningde, Fujian 352100 (CN); JIN, Haizu, Ningde, Fujian 352100 (CN); WU, Kai, Ningde, Fujian 352100 (CN)
(74) Representative: Ziebig Hengelhaupt Intellectual Property Attorneys Patentanwaltskanzlei PartGmbB
(86) International application number: PCT/CN2024/139244
(87) International publication number: WO 2025/145879

(57) **Abstract**

The application discloses an electrode assembly and a preparation method therefor, a battery cell, a battery and an electrical apparatus. The electrode assembly comprises: a negative pole piece. The negative pole piece comprises a bend area. The bend area comprises a first negative electrode active material layer. The first negative electrode active material layer comprises first dielectric material particles, wherein the volume average particle size Dv50 of the first dielectric material particles is D₁, and D₁ is 200 nm-2000 nm. The relative dielectric constant of the first dielectric material particles is 1000-10000. On the basis of the total mass of the first negative electrode active material layer, the proportion of the first dielectric material particles is W₁, and W₁ is 0.5%-10%. Therefore, the first negative electrode active material layer on the bend area of the negative pole piece of the electrode assembly comprises the first dielectric material particles having the described particle size, content and relative dielectric constant, such that the cycle performance in the quick charging process of the battery containing same can be improved.

## Description

### TECHNICAL FIELD

This application belongs to the field of batteries, and specifically relates to an electrode assembly and a preparation method thereof, a battery cell, a battery, and an electric apparatus.

### BACKGROUND

Secondary batteries are widely used in energy storage power systems such as hydraulic, thermal, wind, and solar power stations, as well as in various fields such as electric tools, electric bicycles, electric motorcycles, electric vehicles, military equipment, and aerospace. As the application range of batteries becomes increasingly wide, the requirements on performance of secondary batteries are also becoming increasingly stringent, for example, requiring fast charging capability of secondary batteries. However, when a battery cell is a wound structure, metal dendrites are likely to occur in a corner region of a negative electrode sheet during fast charging of a battery, leading to degradation in the cycling performance of the battery.

### SUMMARY

In view of the technical problems existing in the background, this application proposes an electrode assembly, aiming to improve the cycling performance of a battery including the same during fast charging.

To achieve the above objective, according to a first aspect, this application proposes an electrode assembly, including a negative electrode sheet. The negative electrode sheet includes a corner region. The corner region includes a first negative electrode active material layer. The first negative electrode active material layer includes first dielectric material particles. A volume-based mean particle size Dᵥ50 of the first dielectric material particles is D₁, where D₁ is 200 nm to 2000 nm. A relative dielectric constant of the first dielectric material particles is 1000 to 10000. Based on a total mass of the first negative electrode active material layer, a proportion of the first dielectric material particles is W₁, where W₁ is 0.5% to 10%.

This application has at least the following beneficial effects: when the first negative electrode active material layer on the corner region of the negative electrode sheet of the electrode assembly of this application includes the first dielectric material particles having the above particle size, content, and relative dielectric constant, the cycling performance of a battery including the same during fast charging can be improved.

In some embodiments, W₁ is 1% to 3%. Thus, the cycling performance of the battery during fast charging can be improved.

In some embodiments, D₁ is 600 nm to 1000 nm. Thus, the cycling performance of the battery during fast charging can be improved.

In some embodiments, the relative dielectric constant of the first dielectric material particles is 1500 to 5000. Thus, the cycling performance of the battery during fast charging can be improved.

In some embodiments, the first dielectric material particles include at least one of barium titanate, lead titanate, lithium niobate, lead zirconate titanate, lead metaniobate, or lithium barium lead niobate. Thus, the cycling performance of the battery during fast charging can be improved.

In some embodiments, the first dielectric material particles include doping ions, and the doping ions include at least one of trivalent rare earth metal ions, Nb⁵⁺, W⁵⁺, Mo⁵⁺, Al³⁺, Ga³⁺, Cr³⁺, Mn³⁺, Mg²⁺, Si⁴⁺, or Ca²⁺. Thus, the cycling performance of the battery during fast charging can be improved.

In some embodiments, the first dielectric material particles include at least one of barium titanate doped with trivalent rare earth metal ions, barium titanate doped with pentavalent ions, lead titanate doped with pentavalent ions, or lead zirconate titanate doped with pentavalent ions. Thus, the cycling performance of the battery during fast charging can be improved.

In some embodiments, the trivalent rare earth metal ions include at least one of Sc³⁺, Y³⁺, or Yb³⁺. Thus, the cycling performance of the battery during fast charging can be improved.

In some embodiments, a BET specific surface area of the first dielectric material particles is 0.8 m²/g to 7 m²/g, optionally 1.8 m²/g to 2 m²/g. Thus, the cycling performance of the battery during fast charging can be improved.

In some embodiments, the barium titanate includes a tetragonal crystal form. Thus, the cycling performance of the battery during fast charging can be improved.

In some embodiments, the first negative electrode active material layer includes a first negative electrode active material, a volume-based mean particle size Dᵥ50 of the first negative electrode active material is D₂, and D₁ ≤ D₂, optionally D₁ < D₂. Thus, the cycling performance of the battery during fast charging can be improved.

In some embodiments, D₂ is 2 µm to 20 µm, optionally 8 µm to 13 µm. Thus, the cycling performance of the battery during fast charging can be improved.

In some embodiments, a length of the corner region is 5 mm to 30 mm, optionally 6 mm to 15 mm. Thus, the cycling performance of the battery during fast charging can be improved.

In some embodiments, the negative electrode sheet further includes a straight region, the corner region is provided at two ends of the straight region, and the straight region is provided with a second negative electrode active material layer. The second negative electrode active material layer includes second dielectric material particles. Based on a total mass of the second negative electrode active material layer, a proportion of the second dielectric material particles is W₂, where W₁ ≥ W₂.

In some embodiments, W₂ is 0 to 5%, optionally 0 to 1%. Thus, the cycling performance of the battery during fast charging can be improved.

In some embodiments, based on the total mass of the first negative electrode active material layer, a mass proportion of the first negative electrode active material is K₁, the second negative electrode active material layer includes a second negative electrode active material, and based on the total mass of the second negative electrode active material layer, a mass proportion of the second negative electrode active material is K₂, where K₁ ≤ K₂.

In some embodiments, K₁ is 90% to 98%, optionally 93% to 97%.

In some embodiments, K₂ is 90% to 98%, optionally 95% to 98%.

In some embodiments, the negative electrode sheet further includes a negative electrode current collector and a third negative electrode active material layer. The third negative electrode active material layer is provided on at least one side of the negative electrode current collector. The first negative electrode active material layer and the second negative electrode active material layer are provided on a side of the third negative electrode active material layer away from the negative electrode current collector.

In some embodiments, a thickness of the first negative electrode active material layer is H₁, a thickness of the third negative electrode active material layer is H₃, and H₁/H₃ is 4% to 30%, optionally 10% to 20%.

In some embodiments, the thickness of the first negative electrode active material layer is not greater than a thickness of the second negative electrode active material layer.

In some embodiments, at least one of the following conditions is satisfied: the thickness of the first negative electrode active material layer is 20 µm to 100 µm, optionally 40 µm to 80 µm; the thickness of the second negative electrode active material layer is 20 µm to 100 µm, optionally 40 µm to 80 µm; and the thickness of the third negative electrode active material layer is 40 µm to 200 µm, optionally 60 µm to 150 µm.

In some embodiments, at least a portion of a surface of the first negative electrode active material is provided with a first coating layer, and the first coating layer includes the first dielectric material particles; and/or at least a portion of a surface of the second negative electrode active material is provided with a second coating layer, and the second coating layer includes the second dielectric material particles.

In some embodiments, the first negative electrode active material, the second negative electrode active material, and a third negative electrode active material in the third negative electrode active material layer each independently include at least one of artificial graphite, natural graphite, soft carbon, hard carbon, a silicon-based material, a tin-based material, or titanate.

According to a second aspect of this application, this application proposes a preparation method of an electrode assembly, including:
stacking a positive electrode sheet and a negative electrode sheet, followed by winding along a winding direction to form the electrode assembly. The negative electrode sheet includes a corner region. The corner region includes a first negative electrode active material layer. The first negative electrode active material layer includes first dielectric material particles. A volume-based mean particle size Dᵥ50 of the first dielectric material particles is D₁, where D₁ is 200 nm to 2000 nm. A relative dielectric constant of the first dielectric material particles is 1000 to 10000. Based on a total mass of the first negative electrode active material layer, a proportion of the first dielectric material particles being W₁, where W₁ is 0.5% to 10%.

Thus, a battery adopting an electrode assembly obtained by this method has excellent cycling performance during fast charging.

According to a third aspect of this application, this application proposes a battery cell, including the electrode assembly according to the first aspect of this application or an electrode assembly obtained by the method according to the second aspect of this application.

According to a fourth aspect of this application, this application proposes a battery, including the electrode assembly according to the first aspect of this application, or an electrode assembly obtained by the method according to the second aspect of this application, or the battery cell according to the third aspect of this application. Thus, the battery has excellent cycling performance.

In some embodiments, the battery includes a lithium-ion battery or a sodium-ion battery.

According to a fifth aspect of this application, this application proposes an electric apparatus, including the battery according to the fourth aspect of this application.

Additional aspects and advantages of this application are partially given in the following description, and some of them become apparent from the following description, or be learned through practice of this application.

### BRIEF DESCRIPTION OF DRAWINGS

By reading the detailed description of the preferred embodiments below, various other advantages and benefits become clear and apparent to those of ordinary skill in the art. The drawings are only for the purpose of illustrating the preferred embodiments and are not construed as limiting this application. Moreover, the same reference signs are used to represent the same components throughout the drawings. In the drawings:
FIG. 1 is a schematic structural diagram of an electrode assembly according to an embodiment of this application.
FIG. 2 is an XRD pattern of barium titanate according to an embodiment of this application.
FIG. 3 is a schematic structural diagram of an electrode assembly according to another embodiment of this application.
FIG. 4 is a schematic structural diagram of an electrode assembly according to still another embodiment of this application.
FIG. 5 is a schematic structural diagram of an electrode assembly according to yet another embodiment of this application.
FIG. 6 is a schematic diagram of a battery cell according to an embodiment of this application.
FIG. 7 is an exploded view of the battery cell according to an embodiment of this application shown in FIG. 6.
FIG. 8 is a schematic diagram of a battery module according to an embodiment of this application.
FIG. 9 is a schematic diagram of a battery pack according to an embodiment of this application.
FIG. 10 is an exploded view of the battery pack according to an embodiment of this application shown in FIG. 9.
FIG. 11 is a schematic diagram of an electric apparatus using a battery as a power source according to an embodiment of this application.
FIG. 12 is a photograph of a negative electrode sheet disassembled from a battery obtained in Example 1 after cycling.
FIG. 13 is a photograph of a negative electrode sheet disassembled from a battery obtained in Comparative Example 5 after cycling.

Description of reference signs:
10. electrode assembly; 100. positive electrode sheet; 200. negative electrode sheet; 21. corner region; 210. first negative electrode active material layer; 22. straight region; 220. second negative electrode active material layer; 23. third negative electrode active material layer; 24. negative electrode current collector; 300. separator; 1. battery cell; 11. shell; 13. cover plate; 2. battery module; 3. battery pack; 31. upper box body; and 32. lower box body.

### DETAILED DESCRIPTION OF EMBODIMENTS

The embodiments of the technical solutions of this application are described in detail below. The following embodiments are only used to more clearly illustrate the technical solutions of this application and thus serve as examples only, and cannot be used to limit the protection scope of this application.

As used herein, reference to "an embodiment" means that a particular feature, structure, or characteristic described in connection with this embodiment can be included in at least one embodiment of this application. The phrase appearing at various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

The "range" disclosed in this application is defined in the form of a lower limit and an upper limit, and a given range is defined by selecting a lower limit and an upper limit, where the selected lower limit and upper limit define the boundaries of the particular range. A range defined in this way may include endpoints or may not include endpoints, and the endpoints can be arbitrarily combined, that is, any lower limit can be combined with any upper limit to form a range. For example, if ranges of 60 to 120 and 80 to 110 are listed for a particular parameter, ranges of 60 to 110 and 80 to 120 are also contemplated. In addition, if minimum range values 1 and 2 are listed, and if maximum range values 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a and b, where a and b are both real numbers. For example, a numerical range "0 to 5" means that all real numbers between "0 to 5" have been listed herein, and "0 to 5" is just an abbreviated representation of combinations of these numbers. In addition, when a parameter is expressed as an integer greater than or equal to 2, it is equivalent to disclosing that the parameter is, for example, an integer 2, 3, 4, 5, 6, 7, 8, 9, 10, 11, 12, or the like.

Unless otherwise specified, all embodiments and optional embodiments of this application can be combined with each other to form a new technical solution.

Unless otherwise specified, all technical features and optional technical features of this application can be combined with each other to form a new technical solution.

Unless otherwise specified, all steps of this application may be performed sequentially or randomly, preferably sequentially. For example, the method includes steps (a) and (b), meaning that the method may include steps (a) and (b) performed sequentially, or may include steps (b) and (a) performed sequentially. For example, when it is mentioned that the method may further include step (c), it means that step (c) may be added to the method in any order, for example, the method may include steps (a), (b), and (c), may include steps (a), (c), and (b), may include steps (c), (a), and (b), or the like.

At present, from the development of the market situation, the application of secondary batteries is becoming increasingly widespread. Secondary batteries are not only applied in energy storage power systems such as hydraulic, thermal, wind, and solar power stations, but also widely applied in electric vehicles such as electric bicycles, electric motorcycles, and electric vehicles, as well as in various fields such as military equipment and aerospace.

As the application range of secondary batteries becomes increasingly wide, the requirements on performance of secondary batteries are also becoming increasingly stringent, for example, requiring fast charging capability of secondary batteries. When a cell is a wound structure, a spacing between positive and negative electrode sheets in a corner region is large, and a transport path of active ions is prolonged spatially, which easily causes increased polarization in the corner region, leading to large areas of metal lithium precipitation. This situation is more prominent during fast charging of the battery.

The electrode assembly disclosed in the embodiments of this application is applicable to lithium-ion batteries and sodium-ion batteries, and the battery disclosed in the embodiments of this application can be used in electric devices using a battery as a power source or various energy storage systems using a battery as an energy storage element. The electric devices may include but are not limited to mobile phones, tablets, notebook computers, electric toys, electric tools, battery cars, electric vehicles, ships, and spacecraft. The electric toys may include fixed or mobile electric toys, such as game consoles, electric toy cars, electric toy ships, and electric toy airplanes. The spacecraft may include airplanes, rockets, space shuttles, spaceships, and the like.

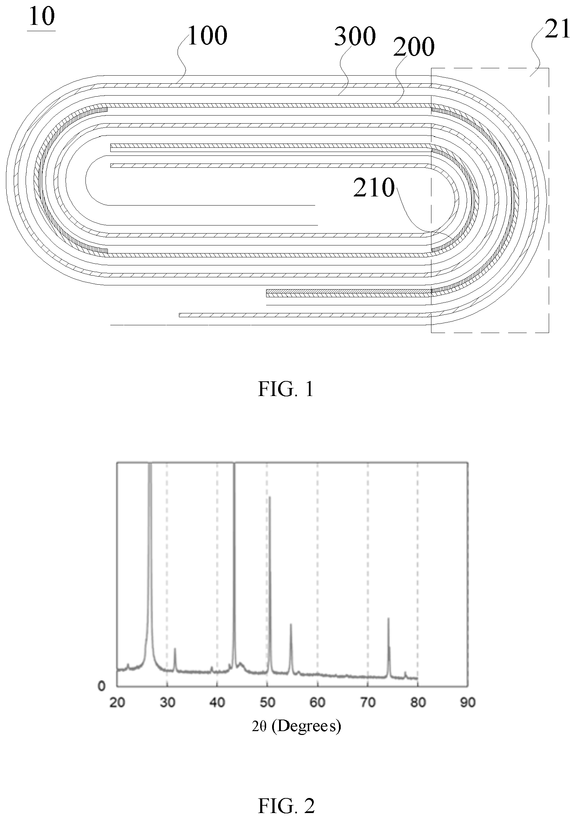

According to a first aspect, this application proposes a negative electrode sheet. Referring to FIG. 1, the electrode assembly 10 includes a negative electrode sheet 200. The negative electrode sheet 200 includes a corner region 21. The corner region 21 includes a first negative electrode active material layer 210. The first negative electrode active material layer 210 includes first dielectric material particles. A volume-based mean particle size Dᵥ50 of the first dielectric material particles is D₁, where D₁ is 200 nm to 2000 nm. A relative dielectric constant of the first dielectric material particles is 1000 to 10000. Based on a total mass of the first negative electrode active material layer 210, a proportion of the first dielectric material particles being W₁, where W₁ is 0.5% to 10%.

In this application, referring to FIG. 1, the "corner region 21" refers to a region having a bent structure in the negative electrode sheet 200 of the electrode assembly 10 obtained by stacking and winding a positive electrode sheet 100, a separator 300, and the negative electrode sheet 200. To be specific, portions of the negative electrode sheet 200 in the corner region 21 are all bent, that is, a surface of each layer of negative electrode sheet 200 of the electrode assembly 10 in the corner region 21 is a curved surface.

The first negative electrode active material layer 210 on the corner region 21 of the negative electrode sheet 200 of the electrode assembly 10 of this application includes the first dielectric material particles having the above particle size, content, and relative dielectric constant, so that the cycling performance of a battery including the same during fast charging can be improved.

A process by which the above first dielectric material particles exert the performance thereof is speculated as follows: the first dielectric material particles having the above particle size, content, and relative dielectric constant are added to the first negative electrode active material layer 210 corresponding to the corner region 21 of the negative electrode sheet 200 on the electrode assembly 10 of this application; during charging of the battery including the electrode assembly 10, when the first dielectric material particles are under the action of an electric field, centers of positive and negative charges in the material are separated, generating a counter electric field inside; and the counter electric field generated by the first dielectric material particles on a surface of the first negative electrode active material layer 210 corresponding to the corner region 21 of the electrode assembly 10 exhibits negative electricity, so that active ions aggregated on the surface of the first negative electrode active material layer 210 corresponding to the corner region 21 may be attracted and uniformly distributed, reducing the risk of formation of metal dendrites caused by aggregation of active ions on the surface of the first negative electrode active material layer 210 corresponding to the corner region 21, thereby improving the cycling performance of the battery including the same during fast charging.

In some embodiments of this application, based on the total mass of the first negative electrode active material layer 210, the proportion of the first dielectric material particles is 0.5% to 10%, such as 0.5% to 9.8%, 0.5% to 9.5%, 0.6% to 9.2%, 0.7% to 9%, 0.8% to 8.8%, 0.9% to 8.5%, 1% to 8%, 1.1% to 7.8%, 1.2% to 7.5%, 1.3% to 7.2%, 1.5% to 7%, 1.8% to 6.5%, 2% to 6%, 2.5% to 5.5%, 2.8% to 5%, 3% to 4.5%, or 3.5% to 4%. In some other embodiments of this application, based on the total mass of the first negative electrode active material layer 210, the proportion of the first dielectric material particles is 1% to 3%.

In some embodiments of this application, the volume-based mean particle size Dᵥ50 of the first dielectric material particles is D₁, where D₁ is 200 nm to 2000 nm, such as 300 nm to 1900 nm, 400 nm to 1800 nm, 500 nm to 1700 nm, 600 nm to 1600 nm, 700 nm to 1500 nm, 800 nm to 1400 nm, 900 nm to 1300 nm, 1000 nm to 1200 nm, or 1000 nm to 1100 nm. In some other embodiments of this application, the volume-based mean particle size Dᵥ50 of the first dielectric material particles is 600 nm to 1000 nm.

In this application, the volume-based mean particle size Dᵥ50 refers to a particle size at which a cumulative volume distribution percentage reaches 50%, and a test method for the volume-based mean particle size Dᵥ50 of the first dielectric material particles in the negative electrode sheet 200 includes the following steps:
(1) disassembling the electrode assembly 10, then scraping powder from the first negative electrode active material layer 210 on the corresponding corner region 21 of the negative electrode sheet 200, getting a sample and calcining the sample to 600°C to completely calcine a binder, the negative electrode active material, and the like (after calcining, mixing a silicon-based negative electrode active material system with a sodium hydroxide solution for reaction), and then adding water for filtration); and
(2) with reference to the standard GB/T 19077-2016, using a laser particle size analyzer (for example, Malvern Master Size 3000) to test the volume-based mean particle size Dᵥ50 of the first dielectric material particles in the filtered material.

In this application, a test method for the mass proportion of the first dielectric material particles in the negative electrode sheet 200 includes: disassembling the electrode assembly 10, then scraping powder from the first negative electrode active material layer 210 on the corresponding corner region 21 of the disassembled negative electrode sheet 200, and performing thermogravimetric test on a sample (after calcining, mixing a silicon-based negative electrode active material system with a sodium hydroxide solution for reaction, where the powder obtained after filtration is the sample), where test conditions are as follows: the test is performed in an oxygen atmosphere, with the sample being heated from 25°C to 1000°C at a heating rate of 5°/min, where a longitudinal coordinate in a thermogravimetric curve (thermogravimetric (TG) curve, with longitudinal coordinate as weight percentage and horizontal coordinate as temperature) corresponding to 1000°C is the mass proportion of the first dielectric material particles in the first negative electrode active material layer.

In some embodiments of this application, the relative dielectric constant of the first dielectric material particles is 1000 to 10000, such as 1000 to 9500, 1200 to 9000, 1300 to 8500, 1500 to 8000, 1600 to 7500, 1700 to 7000, 1800 to 6500, 1900 to 6000, 2000 to 5500, 2100 to 5000, 2200 to 4500, 2300 to 4000, 2400 to 3500, 2500 to 3000, 2600 to 2900, or 2700 to 2800. In some other embodiments of this application, the relative dielectric constant of the first dielectric material particles is 1500 to 5000.

In this application, the relative dielectric constant of the first dielectric material particles refers to a relative dielectric constant at room temperature (25°C ± 5°C), which has the meaning well known in the art and may be tested using instruments and methods known in the art. For example, the electrode assembly 10 may be first disassembled, then powder is scraped from the first negative electrode active material layer 210 of the corner region 21 of the negative electrode sheet 200, a sample is taken and calcined to 600°C to completely calcine a binder, the negative electrode active material, and the like (after calcining, a silicon-based negative electrode active material system is mixed with a sodium hydroxide solution for reaction), water is added for filtration and separation to obtain the first dielectric material particles, and then the first dielectric material particles are prepared into a circular sample (the sample preparation process includes: 40 g of the binder is added to 200 g of to-be-tested dielectric material particles (the binder is formed by compounding an acrylic acid (PAA) emulsion and an alcohol amine plasticizer, with a decomposition temperature lower than 300°C); the mixture is stirred thoroughly and uniformly, then slowly added to an automatic roll press (the roll press is a double-roller roll press, where the rollers are made of stainless steel, with surface polished; and a gap between the two rollers is adjustable within a range of 0.5 mm to 2 mm), and rolled into a raw ceramic cake with a thickness of 1 mm ± 0.15 mm, where the raw ceramic cake is qualified if there is no color difference on surface, and the cross section is uniform without obvious delamination; and then the raw ceramic cake is placed under an indenter of a punching machine (the indenter of the punching machine is circular with size of φ10 mm to φ13 mm; and the indenter is made of stainless steel, with surface polished), and punched into 10 thin circular ceramic sheets with a diameter of 11 mm ± 1 mm; (2) degumming: the thin circular ceramic sheets obtained in step (1) are placed on a clean and flat zirconia or alumina setter plate; the thin circular ceramic sheets are put into a muffle furnace together with the setter plate, and heated to 300°C at a heating rate of 0.3°C/min and maintained at the temperature for 6 h for degumming; and after front side degumming is completed, the thin circular ceramic sheets are taken out, arranged with back side up, and the above operations are repeated for back side degumming; (3) silver coating: the thin circular ceramic sheets subjected to the degumming in step (2) are placed on the clean and flat zirconia or alumina setter plate, and a fine brush is used to uniformly brush a silver slurry onto front sides of the thin circular ceramic sheets, where the silver slurry is a high-temperature calcined conductive silver slurry, and the silver slurry is brushed unidirectionally 2 to 3 times, with a thickness of 80 µm to 100 µm; (4) silver firing: first, the silver layer attached to a side of the thin circular ceramic sheet coated with silver in step (3) is gently scraped off with a blade, and then the silver-coated thin circular ceramic sheets together with the setter plate are put into a muffle furnace, and subjected to silver firing according to the following parameters: being heated to 800°C at a heating rate of 5°C/min and maintained at the temperature for 2 h; after silver firing of the front side, the thin circular ceramic sheets and setter plate are taken out; and steps (3) and (4) are repeated for silver firing of the back side). Then, an LCR tester is used to test a capacitance C and calculate it according to the formula: relative dielectric constant ε = (C × d) / (ε₀ × A). C represents a capacitance, measured in farads (F); d represents a thickness of the sample, measured in cm; A represents an area of the sample, measured in cm²; and ε₀ represents a vacuum dielectric constant, where ε₀ = 8.854 × 10⁻¹⁴ F/cm. In this application, the test conditions may be 1 kHz, 1.0 V, and 25°C ± 5°C. For test standards, reference may be made to GB/T 11297.11-2015.

In some embodiments of this application, the first dielectric material particles include at least one of barium titanate, lead titanate, lithium niobate, lead zirconate titanate, lead metaniobate, or lithium barium lead niobate. Thus, the use of such first dielectric material particles in the first negative electrode active material layer 210 of the corner region 21 of the negative electrode sheet 200 can further improve the cycling performance of the battery including the same during fast charging.

A process by which the first dielectric material particles with the above composition exert the performance thereof is speculated as follows: the first dielectric material particles with the above composition can exert an excellent counter electric field effect, so that the active ions aggregated on the surface of the first negative electrode active material layer 210 corresponding to the corner region 21 of the negative electrode sheet 200 may be uniformly distributed, reducing the risk of formation of metal dendrites caused by aggregation of active ions on the surface of the first negative electrode active material layer 210 corresponding to the corner region 21, thereby improving the cycling performance of the battery including the same during fast charging.

In some embodiments of this application, the first dielectric material particles include doping ions, and the doping ions including at least one of trivalent rare earth metal ions, Nb⁵⁺, W⁵⁺, Mo⁵⁺, Al³⁺, Ga³⁺, Cr³⁺, Mn³⁺, Mg²⁺, Si⁴⁺, or Ca²⁺. Thus, by doping the first dielectric material particles of this application with the above ions, the relative dielectric constant of the first dielectric material particles can be adjusted, thereby improving the cycling performance of the battery including the same during fast charging.

A process by which the doped first dielectric material particles exert the performance thereof is speculated as follows: by doping the first dielectric material particles with the above ions, the relative dielectric constant of the dielectric material particles can be adjusted, so that the active ions aggregated on the surface of the first negative electrode active material layer 210 corresponding to the corner region 21 of the negative electrode sheet 200 may be uniformly distributed, reducing the risk of formation of metal dendrites caused by aggregation of active ions on the surface of the first negative electrode active material layer 210 corresponding to the corner region 21, thereby improving the cycling performance of the battery including the same during fast charging.

In an example, the first dielectric material particles may include at least one of barium titanate doped with trivalent rare earth metal ions, barium titanate doped with pentavalent ions, lead titanate doped with pentavalent ions, or lead zirconate titanate doped with pentavalent ions. For example, the trivalent rare earth metal ions include at least one of Sc³⁺, Y³⁺, or Yb³⁺, and the pentavalent ions include at least one of Nb⁵⁺, W⁵⁺, or Mo⁵⁺. For example, the first dielectric material particles may include BaₓTi_{y}Al_{z}O₃ (x + y + z = 1), BaₐY_{b}Ti_{c}O₃ (a + b + c = 1), PbₘTiₙNbₚO₃ (m + n + p = 1), and the like.

In some embodiments of this application, the first dielectric material particles are barium titanate, and the barium titanate includes a tetragonal crystal form.

In this application, the "tetragonal crystal form" refers to a crystal structure having a unit cell including three axes, where two of the axes have the same length and are perpendicular to each other, and the third axis is perpendicular to the other two axes. The tetragonal crystal form of barium titanate can be obtained by XRD testing. FIG. 2 is an XRD pattern of barium titanate in a tetragonal crystal form, with 2θ positions of X-ray diffraction peaks at 22°, 31°, 38°, 45°, 56°, and 66°.

Thus, the use of the above barium titanate in a tetragonal crystal form as the first dielectric material particles can further reduce the risk of formation of metal dendrites caused by aggregation of active ions on the surface of the first negative electrode active material layer 210 corresponding to the corner region 21 of the negative electrode sheet 200, thereby improving the cycling performance of the battery including the same during fast charging.

In some embodiments of this application, a BET specific surface area of the first dielectric material particles is 0.8 m²/g to 7 m²/g, such as 0.9 m²/g to 6.5 m²/g, 1 m²/g to 6 m²/g, 1.5 m²/g to 5.5 m²/g, 1.8 m²/g to 5 m²/g, or 0.8 m²/g to 7 m²/g.

Thus, the first dielectric material particles in the above specific surface area range is bonded more closely with the negative electrode active material, which facilitates the exertion of the performance of the dielectric material particles, possibly further reducing the risk of formation of metal dendrites caused by aggregation of active ions on the surface of the first negative electrode active material layer 210 corresponding to the corner region 21, thereby improving the cycling performance of the battery including the same during fast charging. In some other embodiments of this application, the BET specific surface area of the first dielectric material particles is 1.8 m²/g to 2 m²/g.

In this application, the BET specific surface area of the first dielectric material particles has the meaning well known in the art and may be tested using instruments and methods known in the art. For example, first the electrode assembly 10 is disassembled, then powder is scraped from the first negative electrode active material layer 210 corresponding to the corner region 21 of the negative electrode sheet 200, a sample is taken and calcined to 600°C to completely calcine a binder, the negative electrode active material, and the like (after calcining, a silicon-based negative electrode active material system is mixed with a sodium hydroxide solution for reaction), and water is added for filtration. Then, with reference to GB/T 19587-2017, the filtered sample is tested using a nitrogen adsorption specific surface area analysis test method, and a BET (Brunauer Emmett Teller) method is used for calculation to obtain the BET specific surface area. The nitrogen adsorption specific surface area analysis test may be performed using a Tri-Star 3020 specific surface area and pore size analyzer from Micromeritics, USA.

In some embodiments of this application, the first negative electrode active material layer 210 may be provided on either or both of two opposite surfaces of the corner region 21 of the negative electrode sheet 200 along a thickness direction. In addition, the first negative electrode active material layer 210 may be provided on a portion of the corner region 21, or the first negative electrode active material layer 210 may be provided on the entire corner region 21. In an example, the first negative electrode active material layer 210 is provided on the entire region of the two opposite surfaces of the corner region 21 of the negative electrode sheet 200 along the thickness direction.

In some embodiments of this application, the first negative electrode active material layer 210 includes a first negative electrode active material, a volume-based mean particle size Dᵥ50 of the first negative electrode active material is D₂, and D₁ ≤ D₂. In some other embodiments of this application, the first negative electrode active material layer 210 includes a first negative electrode active material, a volume-based mean particle size Dᵥ50 of the first negative electrode active material is D₂, and D₁ < D₂.

Thus, the first negative electrode active material and the first dielectric material particles satisfy the above conditions in particle size, which not only may fully exert the counter electric field effect of the first dielectric material particles, so that active ions aggregated on the surface of the first negative electrode active material layer 210 corresponding to the corner region 21 of the negative electrode sheet 200 are uniformly distributed, reducing the risk of formation of metal dendrites caused by aggregation of active ions on the surface of the first negative electrode active material layer 210 corresponding to the corner region 21, thereby improving the cycling performance of the battery including the same during fast charging; but also may make the first negative electrode active material layer 210 have a high compacted density, increasing the energy density of the battery.

In some embodiments of this application, the volume-based mean particle size Dᵥ50 of the first negative electrode active material is D₂, where D₂ is 2 µm to 20 µm, such as 5 µm to 18 µm, 8 µm to 15 µm, or 10 µm to 12 µm.

Thus, the cooperation of the first negative electrode active material with the above particle size and the first dielectric material particles not only may fully exert the counter electric field effect of the first dielectric material particles, so that active ions aggregated on the surface of the first negative electrode active material layer 210 corresponding to the corner region 21 of the negative electrode sheet 200 are uniformly distributed, reducing the risk of formation of metal dendrites caused by aggregation of active ions on the surface of the first negative electrode active material layer 210 corresponding to the corner region 21, thereby improving the cycling performance of the battery including the same during fast charging; but also may make the first negative electrode active material layer 210 have a high compacted density, increasing the energy density of the battery. In some other embodiments of this application, the volume-based mean particle size Dᵥ50 of the first negative electrode active material is D₂, where D₂ is 8 µm to 13 µm.

In this application, a test method for the volume-based mean particle size Dᵥ50 of the first negative electrode active material includes: first disassembling the electrode assembly 10; then using flame to ablate a surface of the first negative electrode active material layer 210 on the negative electrode sheet 200 to remove a binder in the surface first negative electrode active material layer 210 (with a flame temperature being 300°C to 500°C, and a moving speed of the negative electrode sheet 200 being 1 m/min to 30 m/min); then scraping powder from the surface layer; sieving the obtained powder (for example, a mesh size of the sieve is 6250 meshes); separating the negative electrode active material from the dielectric material and a conductive agent, to obtain particles on the sieve as the first negative electrode active material; and then, with reference to the standard GB/T 19077-2016, using a laser particle size analyzer (for example, Malvern Master Size 3000) to test the first negative electrode active material to obtain the volume-based mean particle size Dᵥ50 of the first negative electrode active material.

In this application, the "length of the corner region 21" may be defined as half of a length of the negative electrode sheet 200 located in the corner region 21 on the outermost negative electrode sheet 200 along a winding direction of the electrode assembly 10.

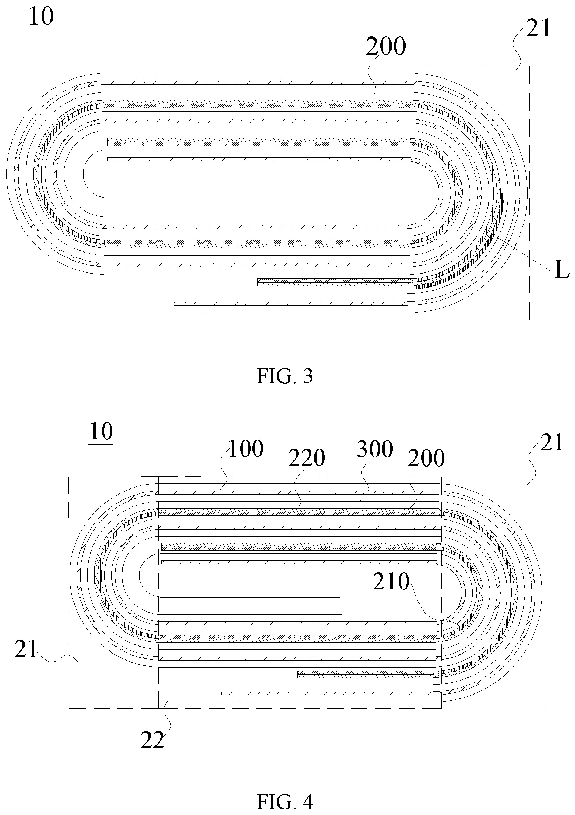

In some embodiments of this application, referring to FIG. 3, a length L of the corner region 21 may be 5 mm to 30 mm, such as 6 mm to 28 mm, 7 mm to 25 mm, 8 mm to 23 mm, 10 mm to 20 mm, 12 mm to 18 mm, 13 mm to 16 mm, or 14 mm to 15 mm. In some other embodiments of this application, the length L of the corner region 21 may be 6 mm to 15 mm.

In some embodiments of this application, referring to FIG. 4, the negative electrode sheet 200 further includes a straight region 22; the straight region 22 and the corner region 21 are alternately arranged along a winding direction of the negative electrode sheet 200; the straight region 22 is provided with a second negative electrode active material layer 220; the second negative electrode active material layer 220 includes second dielectric material particles; and based on a total mass of the second negative electrode active material layer 220, a proportion of the second dielectric material particles is W₂, where W₁ ≥ W₂.

Thus, adding the second dielectric material particles to the second negative electrode active material layer 220 of the straight region 22, and making the content of the second dielectric material particles in the second negative electrode active material layer 220 be less than or equal to the content of the first dielectric material particles in the first negative electrode active material layer 210 can not only reduce the risk of formation of metal dendrites on the surface of the first negative electrode active material layer 210 corresponding to the corner region 21 of the negative electrode sheet 200, but also reduce material costs.

In this application, the "straight region 22" refers to a region having a planar structure in the negative electrode sheet 200 of the electrode assembly 10 obtained by stacking and winding a positive electrode sheet 100, a separator 300, and the negative electrode sheet 200. To be specific, surfaces of the negative electrode sheet 200 in the straight region 22 are all planar, and the corner region 21 is located at each of two ends of the straight region 22. In addition, the Dᵥ50, BET specific surface area, and relative dielectric constant of the "second dielectric material particles" are the same as those of the above "first dielectric material particles", and it should be noted that the composition of the "second dielectric material particles" of this application may be the same as or different from that of the "first dielectric material particles", for example, the first dielectric material particles may be barium titanate, and the second dielectric material particles may be lead titanate.

In some embodiments of this application, the second negative electrode active material layer 220 may be provided on either or both of two opposite surfaces of the straight region 22 of the negative electrode sheet 200 along the thickness direction. In addition, the second negative electrode active material layer 220 may be provided on a portion of the straight region 22, or the second negative electrode active material layer 220 may be provided on the entire straight region 22. In an example, the second negative electrode active material layer 220 is provided on the entire region of the two opposite surfaces of the straight region 22 of the negative electrode sheet 200 along the thickness direction.

In some embodiments of this application, based on the total mass of the second negative electrode active material layer 220, the proportion W₂ of the second dielectric material particles is 0 to 5%, such as 1% to 5%, 2% to 4%, or 2% to 3%. In some embodiments of this application, based on the total mass of the second negative electrode active material layer 220, the proportion W₂ of the second dielectric material particles is 0 to 1%.

In this application, a test method for the mass proportion of the second dielectric material particles in the second negative electrode active material layer 220 includes: first disassembling the electrode assembly 10, then drying the negative electrode sheet 200 obtained after disassembly, then scraping powder from the corresponding second negative electrode active material layer 220 of the straight region 22, and then performing thermogravimetric analysis on the powder obtained from the second negative electrode active material layer 220 (after calcining, mixing a silicon-based negative electrode active material system with a sodium hydroxide solution for reaction, where the powder obtained after filtration is a sample), where test conditions are as follows: the test is performed in an oxygen atmosphere, with the sample being heated from 25°C to 1000°C at a heating rate of 5°C/min, where a longitudinal coordinate in a thermogravimetric curve corresponding to 1000°C is the mass proportion of the second dielectric material particles in the second negative electrode active material layer 220.

In some embodiments of this application, the first negative electrode active material layer 210 includes a first negative electrode active material, and based on the total mass of the first negative electrode active material layer 210, a mass proportion of the first negative electrode active material is K₁; the second negative electrode active material layer 220 includes a second negative electrode active material, and based on the total mass of the second negative electrode active material layer 220, a mass proportion of the second negative electrode active material is K₂; where K₂ ≥ K₁. Thus, the content K₁ of the first negative electrode active material in the first negative electrode active material layer 210 is less than or equal to the content K₂ of the second negative electrode active material in the second negative electrode active material layer 220, which can increase the energy density of the battery while reducing the risk of formation of metal dendrites in the first negative electrode active material layer 210 corresponding to the corner region 21 during fast charging of the battery.

In some embodiments of this application, the mass proportion K₁ of the first negative electrode active material in the first negative electrode active material layer 210 is 90% to 98%, such as 91% to 97%, 92% to 96%, 93% to 95%, or 94% to 95%. In some other embodiments of this application, the mass proportion K₁ of the first negative electrode active material in the first negative electrode active material layer 210 is 93% to 97%. Thus, the energy density of the battery can be increased while the risk of formation of metal dendrites in the first negative electrode active material layer 210 corresponding to the corner region 21 during fast charging of the battery is reduced.

In some embodiments of this application, the mass proportion K₂ of the second negative electrode active material in the second negative electrode active material layer 220 is 90% to 98%, such as 91% to 97%, 92% to 96%, 93% to 95%, or 94% to 95%. In some other embodiments of this application, the mass proportion K₂ of the second negative electrode active material in the second negative electrode active material layer 220 is 95% to 98%. Thus, the energy density of the battery can be increased.

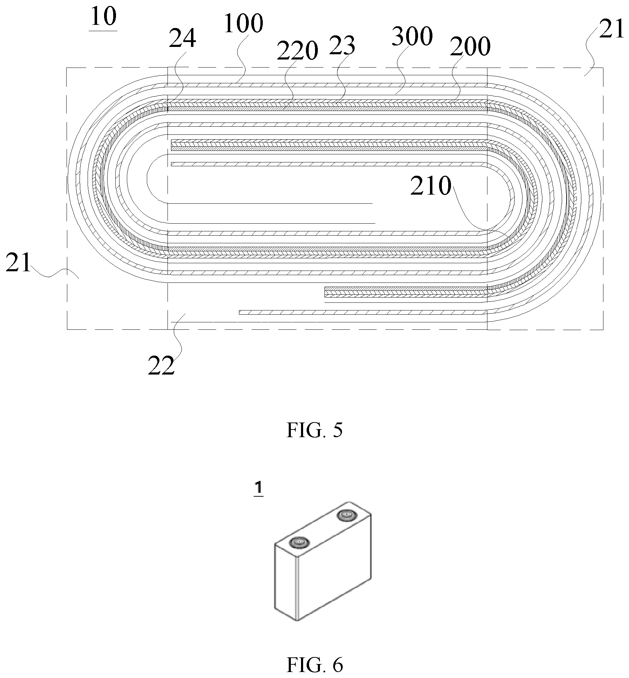

In some embodiments of this application, referring to FIG. 5, the electrode assembly 10 further includes a third negative electrode active material layer 23 and a negative electrode current collector 24, where the third negative electrode active material layer 23 is provided on at least one side of the negative electrode current collector 24, and the first negative electrode active material layer 210 and the second negative electrode active material layer 220 are provided on a side of the third negative electrode active material layer 23 away from the negative electrode current collector 24. Thus, the third negative electrode active material layer 23 is first provided on the negative electrode current collector 24, then the first negative electrode active material layer 210 is provided on the third negative electrode active material layer 23 corresponding to the corner region 21, and the second negative electrode active material layer 220 is provided on the third negative electrode active material layer 23 corresponding to the straight region 22. This can not only reduce the risk of formation of metal dendrites in the first negative electrode active material layer 210 corresponding to the corner region 21 during fast charging of the battery, but also increase the energy density of the battery.

In some embodiments of this application, a thickness of the first negative electrode active material layer 210 is H₁, a thickness of the third negative electrode active material layer 23 is H₃, and H₁/H₃ is 4% to 30%, such as 5% to 25%, 10% to 20%, or 15% to 20%. Thus, the thickness ratio of the first negative electrode active material layer 210 including the first dielectric material particles to the third negative electrode active material layer 23 being within this range can increase the energy density of the battery while further reducing the risk of formation of metal dendrites in the first negative electrode active material layer 210 corresponding to the corner region 21 during fast charging of the battery. In some other embodiments of this application, H₁/H₃ is 10% to 20%.

In some embodiments of this application, the thickness of the first negative electrode active material layer 210 is not greater than a thickness of the second negative electrode active material layer 220.

In an example, the thickness of the first negative electrode active material layer 210 is 20 µm to 100 µm, such as 30 µm to 90 µm, 40 µm to 80 µm, 50 µm to 70 µm, or 50 µm to 60 µm. In some embodiments of this application, the thickness of the first negative electrode active material layer 210 is 40 µm to 80 µm.

In an example, the thickness of the second negative electrode active material layer 220 is 20 µm to 100 µm, such as 30 µm to 90 µm, 40 µm to 80 µm, 50 µm to 70 µm, or 50 µm to 60 µm. In some embodiments of this application, the thickness of the second negative electrode active material layer 220 is 40 µm to 80 µm.

In an example, the thickness of the third negative electrode active material layer 23 is 40 µm to 200 µm, such as 50 µm to 180 µm, 60 µm to 160 µm, 70 µm to 150 µm, 80 µm to 130 µm, 90 µm to 120 µm, or 100 µm to 110 µm. In some embodiments of this application, the thickness of the third negative electrode active material layer 23 is 60 µm to 150 µm.

In some embodiments of this application, at least a portion of a surface of the first negative electrode active material is provided with a first coating layer, and the first coating layer includes the first dielectric material particles. Thus, the first dielectric material particles may be in close contact with the first negative electrode active material, which may help the first dielectric material particles to exert their counter electric field effect during charging. The counter electric field generated by the first dielectric material particles on a surface of the first negative electrode active material layer 210 corresponding to the corner region 21 of the negative electrode sheet 200 exhibits negative electricity, so that active ions aggregated on the surface of the first negative electrode active material layer 210 corresponding to the corner region 21 may be attracted and uniformly distributed, reducing the risk of formation of metal dendrites caused by aggregation of active ions on the surface of the first negative electrode active material layer 210 corresponding to the corner region 21, thereby improving the cycling performance of the battery including the same during fast charging.

In some embodiments of this application, at least a portion of a surface of the second negative electrode active material is provided with a second coating layer, and the second coating layer includes the second dielectric material particles. Thus, the second dielectric material particles may be in close contact with the second negative electrode active material, which may help the second dielectric material particles to exert their counter electric field effect during charging, and the counter electric field generated by the second dielectric material particles on the surface of the negative electrode sheet 200 exhibits negative electricity, so that active ions aggregated on the surface of the negative electrode sheet 200 may be attracted and uniformly distributed, thereby reducing the risk of formation of metal dendrites caused by aggregation of active ions on the surface of the negative electrode sheet 200.

In some embodiments of this application, a metal foil or a composite current collector may be used as the negative electrode current collector 24. For example, copper foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, and the like) on a polymer material substrate (for example, a substrate of polypropylene (PP), polyethylene terephthalate (PET), polybutylene terephthalate (PBT), polystyrene (PS), or polyethylene (PE)).

In some embodiments of this application, the first negative electrode active material and the second negative electrode active material, as well as the third negative electrode active material in the third negative electrode active material layer may adopt negative electrode active materials for batteries well known in the art. In an example, the first negative electrode active material, the second negative electrode active material, and the third negative electrode active material may include at least one of the following materials: artificial graphite, natural graphite, soft carbon, hard carbon, a silicon-based material, a tin-based material, titanate, and the like. The silicon-based material may include at least one of elemental silicon, silicon oxide, a silicon-carbon composite material, a silicon-nitrogen composite material, or silicon alloy. The tin-based material may include at least one of elemental tin, tin oxide, or tin alloy. When the battery is a lithium-ion battery, lithium titanate is used as the titanate; and when the battery is a sodium-ion battery, sodium titanate is used as the titanate. However, this application is not limited to these materials, and other conventional materials that can be used as negative electrode active materials for batteries may also be used. These negative electrode active materials may be used alone, or two or more of them are used in combination.

In some embodiments of this application, the first negative electrode active material layer 210, the second negative electrode active material layer 220, and the third negative electrode active material layer 23 further optionally include a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of this application, the first negative electrode active material layer 210, the second negative electrode active material layer 220, and the third negative electrode active material layer 23 further optionally include a conductive agent. The conductive agent may include at least one of superconducting carbon, acetylene black, carbon black, Ketjen black, carbon dots, carbon nanotubes, graphene, or carbon nanofiber.

In some embodiments of this application, the first negative electrode active material layer 210, the second negative electrode active material layer 220, and the third negative electrode active material layer 23 further optionally include other auxiliary agents, such as a thickener (for example, sodium carboxymethyl cellulose (CMC-Na)).

In some embodiments of this application, the negative electrode sheet may be prepared in the following manner: the above components for preparing the negative electrode sheet, such as the negative electrode active material, the dielectric material particles, the conductive agent, the binder, and any other components, are dispersed in a solvent (such as deionized water) in proportion to form a first negative electrode slurry and a second negative electrode slurry respectively; then the first negative electrode slurry is applied onto two opposite sides or one side of the negative electrode current collector along a thickness direction of the negative electrode current collector at the position of the corner region after a cell is formed by winding; and the second negative electrode slurry is applied onto two opposite sides or one side of the negative electrode current collector along the thickness direction of the negative electrode current collector at the position of the straight region after the cell is formed by winding, followed by processes such as drying and cold pressing, to obtain a negative electrode sheet including the first negative electrode active material layer and the second negative electrode active material layer.

In some embodiments of this application, the negative electrode sheet can alternatively be prepared in the following manner: the above components for preparing the negative electrode sheet, such as the negative electrode active material, the conductive agent, the binder, and any other components, are dispersed in a solvent (such as deionized water) in proportion to form a third negative electrode slurry; the third negative electrode slurry is applied onto two opposite sides or one side of the negative electrode current collector along the thickness direction of the negative electrode current collector; then the negative electrode active material, the dielectric material particles, the conductive agent, the binder, and any other components are dispersed in a solvent (such as deionized water) in proportion to form a first negative electrode slurry and a second negative electrode slurry respectively; then the first negative electrode slurry is applied onto two opposite sides or one side of the third negative electrode active material layer along a thickness direction of the third negative electrode active material layer at the position of the corner region after a cell is formed by winding; and the second negative electrode slurry is applied onto two opposite sides or one side of the third negative electrode active material layer along the thickness direction of the third negative electrode active material layer at the position of the straight region after the cell is formed by winding, followed by processes such as drying and cold pressing, to obtain a negative electrode sheet including the first negative electrode active material layer, the second negative electrode active material layer, and the third negative electrode active material layer.

In some embodiments of this application, the positive electrode sheet includes a positive electrode current collector and a positive electrode active material layer, the positive electrode active material layer is provided on at least one side of the positive electrode current collector, and the positive electrode active material layer includes the positive electrode active material.

In an example, the positive electrode current collector has two opposite surfaces along its thickness direction, and the positive electrode active material layer is provided on either or both of the two opposite surfaces of the positive electrode current collector.

In some embodiments of this application, a metal foil or a composite current collector may be used as the positive electrode current collector. For example, aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (for example, a substrate of polypropylene (PP), polyethylene terephthalate (PET), polybutylene terephthalate (PBT), polystyrene (PS), or polyethylene (PE)).

In some embodiments of this application, the positive electrode active material layer may further include a positive electrode active material, and the positive electrode active material may adopt a positive electrode active material for batteries well known in the art.

In an example, when the positive electrode sheet is used in a lithium-ion battery, the positive electrode active material may adopt a positive electrode active material for lithium-ion batteries well known in the art. In an example, the positive electrode active material may include at least one of the following materials: lithium-containing phosphates with olivine structure, lithium transition metal oxides, and their respective modified compounds. However, this application is not limited to these materials, and other conventional materials that can be used as positive electrode active materials for batteries may also be used. These positive electrode active materials may be used alone, or two or more of them are used in combination. Examples of the lithium transition metal oxides may include but are not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (such as LiNi_{0.8}Co_{0.15}Al_{0.05}O₂), their modified compounds, and the like. Examples of the lithium-containing phosphates with olivine structure may include but are not limited to at least one of lithium iron phosphate (such as LiFePO₄ (also abbreviated as LFP)), a lithium iron phosphate and carbon composite material, lithium manganese phosphate (such as LiMnPO₄), a lithium manganese phosphate and carbon composite material, lithium manganese iron phosphate, or a lithium manganese iron phosphate and carbon composite material.

In an example, when the positive electrode sheet is used in a sodium-ion battery, the positive electrode active material may adopt a positive electrode active material for sodium-ion batteries well known in the art. In an example, the positive electrode active material may include at least one of a layered transition metal oxide, a polyanion compound, and a Prussian blue analog, but is not limited thereto.

As examples of the above layered transition metal oxide, for example, the following may be listed:
Na₁₋ₓCuₕFeₖMnₗM¹ₘO_{2-y}, where M¹ includes at least one of Li, Be, B, Mg, Al, K, Ca, Ti, Co, Ni, Zn, Ga, Sr, Y, Nb, Mo, In, Sn, or Ba, 0 < x ≤ 0.33, 0 < h ≤ 0.24, 0 ≤ k ≤ 0.32, 0 < 1 ≤ 0.68, 0 ≤ m < 0.1, h + k + 1 + m = 1, and 0 ≤ y < 0.2;
Na_{0.67}Mn_{0.7}Ni_{z}M²_{0.3-z}O₂, where M² includes at least one of Li, Mg, Al, Ca, Ti, Fe, Cu, Zn, or Ba, and 0 < z ≤ 0.1; and
NaₐLi_{b}Ni_{c}Mn_{d}FeₑO₂, where 0.67 < a ≤ 1, 0 < b < 0.2, 0 < c < 0.3, 0.67 < d + e < 0.8, and b + c + d + e = 1.

As examples of the above polyanion compound, for example, the following may be listed:
A¹_{f}M³_{g}(PO₄)ᵢOⱼX¹₃₋ⱼ, where A¹ includes at least one of H, Li, Na, K, or NH₄, M³ includes at least one of Ti, Cr, Mn, Fe, Co, Ni, V, Cu, or Zn, X¹ is at least one of F, Cl, or Br, 0 < f ≤ 4, 0 < g ≤ 2, 1 ≤ i ≤ 3, and 0 ≤ j ≤ 2;
NaₙM⁴PO₄X², where M⁴ includes at least one of Mn, Fe, Co, Ni, Cu, or Zn, X² is at least one of F, Cl, or Br, and 0 < n ≤ 2;
NaₚM⁵_{q}(SO₄)₃, where M⁵ includes at least one of Mn, Fe, Co, Ni, Cu, or Zn, 0 < p ≤ 2, and 0 < q ≤ 2; and
NaₛMnₜFe₃₋ₜ(PO₄)₂(P₂O₇), where 0 < s ≤ 4, and 0 ≤ t ≤ 3, for example, t is 0, 1, 1.5, 2, or 3.

As examples of the above Prussian blue analog, for example, the following may be listed:
AᵤM⁶ᵥ[M⁷(CN)₆]_{w}·xH₂O, where A includes at least one of H⁺, NH₄⁺, alkali metal cations, or alkaline earth metal cations, M⁶ and M⁷ each independently include at least one of transition metal cations, 0 < u ≤ 2, 0 < v ≤ 1, 0 < w ≤ 1, and 0 < x < 6. For example, A includes at least one of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, or Ra²⁺, and M⁶ and M⁷ each independently include at least cations of Ti, V, Cr, Mn, Fe, Co, Ni, Cu, Zn, Sn, or W.

Charging and discharging of a battery are accompanied with intercalation, deintercalation and consumption of Li or Na, and a molar content of Li or Na varies when the battery is discharged to different states. In the enumeration of the positive electrode active material in this application, the molar content of Li or Na is based on an initial state of the material, that is, a state before feeding, and when the positive electrode active material is used in a battery system, the molar content of Li or Na changes after charge-discharge cycles.

In the enumeration of the positive electrode active material in this application, a molar content of oxygen is only a theoretical state value, and lattice oxygen release causes changes in molar content of oxygen, resulting in fluctuations in actual molar content of oxygen.

In some embodiments of this application, the positive electrode active material layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In some embodiments of this application, based on a total mass of the positive electrode active material layer, a mass proportion of the binder is 0.5% to 3%, such as 0.5%, 1%, 1.5%, 2%, 2.5%, or 3%.

In some embodiments of this application, the positive electrode active material layer further optionally includes a conductive agent. In an example, the conductive agent may include at least one of superconducting carbon, acetylene black, carbon black, Ketjen black, carbon dots, carbon nanotubes, graphene, or carbon nanofiber.

In some embodiments of this application, based on the total mass of the positive electrode active material layer, a mass proportion of the conductive agent is 0.8% to 4%, such as 0.8%, 1%, 1.5%, 2%, 2.5%, 3%, 3.5%, or 4%.

In some embodiments of this application, the positive electrode sheet may be prepared in the following manner: the above components for preparing the positive electrode sheet, such as the positive electrode active material, the conductive agent, the binder, and any other components, are dispersed in a solvent (such as N-methylpyrrolidone) to form a positive electrode slurry; and the positive electrode slurry is applied onto the positive electrode current collector, followed by processes such as drying and cold pressing, to obtain a positive electrode sheet.

This application imposes no particular limitation on the type of a separator, and any known porous structure separator having good chemical stability and mechanical stability may be selected.

In some embodiments of this application, the material of the separator may include at least one of glass fiber, non-woven fabric, polyethylene, polypropylene, or polyvinylidene fluoride. The separator may be a single-layer film or a multi-layer composite film, without particular limitation. When the separator is a multi-layer composite film, the materials of the layers may be the same or different, without particular limitation.

In some embodiments of this application, the positive electrode sheet, separator, and negative electrode sheet are stacked in sequence and then wound to form the above electrode assembly.

According to a second aspect of this application, this application proposes a preparation method of an electrode assembly, including:
stacking a positive electrode sheet and a negative electrode sheet, followed by winding along a winding direction to form the electrode assembly. The negative electrode sheet includes a corner region. The corner region includes a first negative electrode active material layer. The first negative electrode active material layer includes first dielectric material particles. A volume-based mean particle size Dᵥ50 of the first dielectric material particles is D₁, where D₁ is 200 nm to 2000 nm. A relative dielectric constant of the first dielectric material particles is 1000 to 10000. Based on a total mass of the first negative electrode active material layer, a proportion of the first dielectric material particles is W₁, where W₁ is 0.5% to 10%.

The first negative electrode active material layer on the corner region of the negative electrode sheet of the electrode assembly obtained by the method of this application includes the first dielectric material particles having the above particle size, content, and relative dielectric constant, so that the cycling performance of a battery including the same during fast charging can be improved.

A process by which the above first dielectric material particles exert the performance thereof is speculated as follows: the first dielectric material particles having the above particle size, content, and relative dielectric constant are added to the first negative electrode active material layer corresponding to the corner region of the negative electrode sheet on the electrode assembly obtained in this application; during charging of the battery including the electrode assembly, when the first dielectric material particles are under the action of an electric field, centers of positive and negative charges in the material are separated, generating a counter electric field inside; and the counter electric field generated by the first dielectric material particles on a surface of the first negative electrode active material layer corresponding to the corner region of the electrode assembly exhibits negative electricity, so that active ions aggregated on the surface of the first negative electrode active material layer corresponding to the corner region may be attracted and uniformly distributed, reducing the risk of formation of metal dendrites caused by aggregation of active ions on the surface of the first negative electrode active material layer corresponding to the corner region, thereby improving the cycling performance of the battery including the same during fast charging.

According to a third aspect of this application, this application proposes a battery cell, including the electrode assembly according to the first aspect of this application or an electrode assembly obtained by the method according to the second aspect of this application.

In an example, the battery cell includes an electrode assembly and an electrolyte, and this application imposes no specific limitation on the type of the electrolyte, which may be selected according to needs. For example, the electrolyte may be in a liquid state, a gel state, or an all-solid-state.

In some embodiments of this application, an electrolyte solution is used as the electrolyte. The electrolyte solution includes an electrolytic salt and a solvent.

In some embodiments of this application, when the battery is a lithium-ion battery, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments of this application, when the battery is a sodium-ion battery, the electrolytic salt may include at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethanesulfonyl)imide.

In some embodiments of this application, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, dimethoxyethane, methyl ethyl sulfone, or diethyl sulfone.

In some embodiments of this application, the electrolyte solution further optionally includes an additive. For example, the additive may include a negative electrode film-forming additive and a positive electrode film-forming additive, and may further include additives that can improve some performance of the battery, such as additives that improve the overcharge performance of the battery, additives that improve the high-temperature or low-temperature performance of the battery, and the like.

In some embodiments of this application, the positive electrode sheet, negative electrode sheet, and separator may be made into a wound cell through a winding process.

In some embodiments, the battery cell may include an outer package. The outer package may be configured to encapsulate the above electrode assembly and electrolyte.

In some embodiments, the outer package of the battery cell may be a hard shell, such as a hard plastic shell, aluminum shell, or steel shell. The outer package of the battery cell may alternatively be a soft package, such as a pouch-type soft package. The material of the soft package may be plastic, and examples of the plastic include polypropylene, polybutylene terephthalate, polybutylene succinate, and the like.

This application imposes no particular limitation on the shape of the battery cell, which may be a cylindrical shape, a prismatic shape, or any other shapes. For example, FIG. 6 shows a battery cell 1 of a prismatic structure as an example.

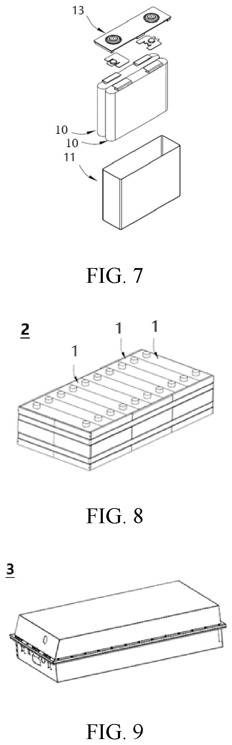

In some embodiments, referring to FIG. 7, the outer package may include a shell 11 and a cover plate 13. The shell 11 may include a bottom plate and side plates connected to the bottom plate, and the bottom plate and side plates enclose an accommodating cavity. The shell 11 has an opening in communication with the accommodating cavity, and the cover plate 13 can cover the opening to close the accommodating cavity. The positive electrode sheet, separator, and negative electrode sheet may form an electrode assembly 10 through stacking and winding processes. The electrode assembly 10 is encapsulated in the accommodating cavity. The electrolyte solution infiltrates into the electrode assembly 10. There may be one or more electrode assemblies 10 in the battery cell 1, and those skilled in the art may select according to specific actual needs.

According to a fourth aspect of this application, this application proposes a battery, including the electrode assembly according to the first aspect of this application, or an electrode assembly obtained by the method according to the second aspect of this application, or the battery cell according to the third aspect of this application.

In some embodiments, the battery includes a lithium-ion battery or a sodium-ion battery. The battery may include a battery cell form, a battery module form, and a battery pack form.

In some embodiments, battery cells may be assembled into a battery module, there may be one or more batteries in the battery module, and the specific number may be selected by those skilled in the art according to the application and capacity of the battery module.

FIG. 8 shows a battery module 2 as an example. Referring to FIG. 8, in the battery module 2, a plurality of battery cells 1 may be arranged in sequence along a length direction of the battery module 2. Certainly, they may alternatively be arranged in any other manner. Further, the plurality of battery cells 1 may be fixed by fasteners.

Optionally, the battery module 2 may further include a housing having an accommodating space, and the plurality of battery cells 1 are accommodated in the accommodating space.

In some embodiments, the above battery module may be assembled into a battery pack, and there may be one or more battery modules in the battery pack, and the specific number may be selected by those skilled in the art according to the application and capacity of the battery pack.

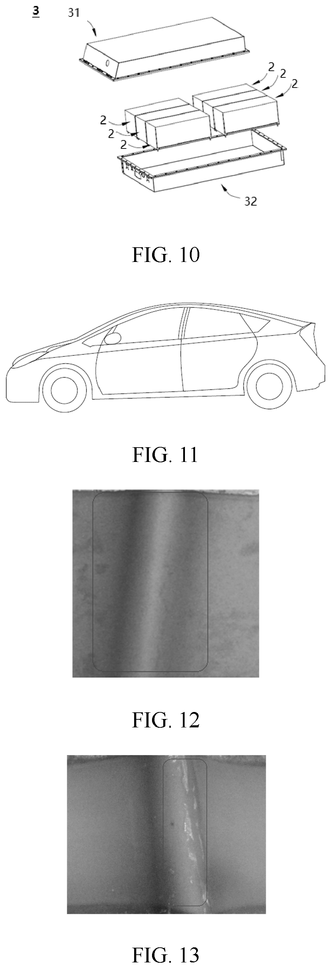

FIG. 9 and FIG. 10 show a battery pack 3 as an example. Referring to FIG. 9 and FIG. 10, the battery pack 3 may include a battery box and a plurality of battery modules 2 disposed in the battery box. The battery box includes an upper box body 31 and a lower box body 32, where the upper box body 31 may cover the lower box body 32 to form a closed space for accommodating the battery modules 2. The plurality of battery modules 2 may be arranged in the battery box in any manner.

In addition, this application further provides an electric apparatus, where the electric apparatus includes the battery provided by this application. The battery cell, battery module, or battery pack may be used as a power source of the electric apparatus or as an energy storage unit of the electric apparatus. The electric apparatus may include mobile devices (such as mobile phones and notebook computers), electric vehicles (such as battery electric vehicles, hybrid electric vehicles, plug-in hybrid electric vehicles, electric bicycles, electric scooters, electric golf carts, and electric trucks), electric trains, ships and satellites, energy storage systems, and the like, but is not limited thereto.

For the electric apparatus, a battery cell, battery module, or battery pack may be selected according to the use needs of the electric apparatus.

FIG. 11 shows an electric apparatus as an example. The electric apparatus is a battery electric vehicle, hybrid electric vehicle, plug-in hybrid electric vehicle, or the like. To meet the high power and high energy density requirements of the electric apparatus on secondary batteries, a battery pack or battery module may be used.

In another example, the apparatus may be a mobile phone, tablet computer, notebook computer, or the like. Such apparatus is usually required to be light and thin, and can use a battery cell as a power source.

The following describes examples of this application. The examples described below are exemplary and are only used to explain this application, and should not be construed as limiting this application. For specific techniques or conditions not specified in the examples, they are carried out according to the techniques or conditions described in the literature in the art or according to the product instructions. Reagents or instruments used without specifying the manufacturer are all conventional products that are commercially available.

### Example 1

### 1. Preparation of positive electrode sheet

A positive electrode active material lithium nickel cobalt manganese oxide (NCM523, that is, LiNi_{0.5}Co_{0.2}Mn_{0.3}O₂), a binder polyvinylidene fluoride PVDF, a conductive agent acetylene black (Super P), and dielectric material particles barium titanate were mixed at a weight ratio of 98:1:1:0, and added with N-methylpyrrolidone (NMP) as a solvent, and the slurry was stirred uniformly under vacuum to obtain a positive electrode slurry. Then, the obtained positive electrode slurry was applied onto two side surfaces of a 13 µm aluminum foil with a scraper blade at an areal density of 13.7 mg/cm², and then the aluminum foil was dried at 140°C, cold pressed, and slit to obtain a positive electrode sheet.

### 2. Preparation of negative electrode sheet

A first negative electrode active material artificial graphite, a conductive agent acetylene black, a composite binder SBR (styrene-butadiene rubber), a dispersant sodium carboxymethyl cellulose (CMC-Na), and first dielectric material particles barium titanate were dissolved in a solvent deionized water at a weight ratio of 94:1:1:1:3, and stirred and mixed uniformly to prepare a first negative electrode slurry. A second negative electrode active material artificial graphite (with a Dᵥ50 of 10.2 µm), the conductive agent acetylene black, the composite binder SBR (styrene-butadiene rubber), the dispersant sodium carboxymethyl cellulose (CMC-Na), and second dielectric material particles barium titanate were dissolved in the solvent deionized water at a weight ratio of 97:1:1:1:0, and stirred and mixed uniformly to prepare a second negative electrode slurry. The first negative electrode slurry was applied onto an entire region of two opposite sides of a negative electrode current collector along a thickness direction of the negative electrode current collector at the position of a corner region after a cell was formed through winding, and the second negative electrode slurry was applied onto the entire region of the two opposite sides of the negative electrode current collector along the thickness direction of the negative electrode current collector at the position of a straight region after the cell was formed through winding (with an application density of 9.6 mg/cm²), followed by drying, cold pressing, and slitting, to obtain a negative electrode sheet (with a first negative electrode active material layer and a second negative electrode active material layer having a same thicknesses of 60 µm).

### 3. Preparation of electrolyte solution

In an argon atmosphere glove box (H₂O < 0.1 ppm, and O₂ < 0.1 ppm), organic solvents ethylene carbonate (EC) and methyl ethyl carbonate (EMC) were mixed uniformly at a volume ratio of 3:7 to obtain an organic solvent, and LiPF₆ was dissolved in this solvent and stirred uniformly, to obtain an electrolyte solution with a concentration of 1 mol/L.

### 4. Separator

A commercially available PP-PE copolymer microporous film with a thickness of 20 µm and an average pore size of 80 nm (from Zhuogao Electronic Technology Co., Ltd., model 20) was used.

### 5. Preparation of secondary battery

The positive electrode sheet, separator, and negative electrode sheet were stacked in sequence, with the separator located between positive and negative electrodes for isolation, and wound to obtain a bare cell. The bare cell was placed in an outer package, and the above electrolyte solution was injected, followed by sealing, to obtain a lithium-ion battery.

The preparation methods of the lithium-ion batteries of Examples 2 to 19 and Comparative Examples 1 to 5 were the same as that of Example 1, except that the process of preparing the negative electrode sheet was different, specifically as shown in Table 1.

The preparation method of the lithium-ion battery of Example 20 was the same as that of Example 1, except that the process of preparing the negative electrode sheet was different, specifically including: a negative electrode active material artificial graphite, a conductive agent acetylene black, a composite binder SBR (styrene-butadiene rubber), a dispersant sodium carboxymethyl cellulose (CMC-Na), and first dielectric material particles barium titanate were dissolved in a solvent deionized water at a weight ratio of 94:1:1:1:3, and stirred and mixed uniformly to prepare a first negative electrode slurry; the negative electrode active material artificial graphite (with a Dᵥ50 of 10.2 µm), the conductive agent acetylene black, the composite binder SBR (styrene-butadiene rubber), the dispersant sodium carboxymethyl cellulose (CMC-Na), and second dielectric material particles barium titanate were dissolved in the solvent deionized water at a weight ratio of 97:1:1:1:0, and stirred and mixed uniformly to prepare a second negative electrode slurry; the negative electrode active material artificial graphite (with a Dᵥ50 of 10.2 µm), the conductive agent acetylene black, the composite binder SBR (styrene-butadiene rubber), and the dispersant sodium carboxymethyl cellulose (CMC-Na) were dissolved in the solvent deionized water at a weight ratio of 97:1:1:1, and stirred and mixed uniformly to prepare a third negative electrode slurry; the third negative electrode slurry was applied onto two opposite sides of a negative electrode current collector along a thickness direction of the negative electrode current collector; then the first negative electrode slurry was applied onto an entire region of two opposite sides of the third negative electrode slurry along a thickness direction of the third negative electrode slurry at the position of a corner region after the cell was formed through winding; and the second negative electrode slurry was applied onto an entire region of two opposite sides of the third negative electrode slurry along the thickness direction of the third negative electrode slurry at the position of a straight region after the cell was formed through winding, followed by drying, cold pressing, and slitting, to obtain a negative electrode sheet (the thickness of the third negative electrode active material layer was 60 µm; the thickness of the first negative electrode active material layer was 40 µm; and the thickness of the second negative electrode active material layer thickness was 60 µm).

**Table 1**

| | Second negative electrode active material layer | | | | | First negative electrode active material layer | | | | | |
|---|---|---|---|---|---|---|---|---|---|---|---|
| | Second dielectric material particles | | | | Mass ratio of second negative electrode active material, conductive agent, binder, dispersant, and second dielectric material particles | First dielectric material particles | | | | Mass ratio of first negative electrode active material, conductive agent, binder, dispersant, and first dielectric material particles | Dᵥ50 of first negative electrode active material (µm) |
| | Composition | Dᵥ50 (nm) | Relative dielectric constant | Mass proportion in second negative electrode active material layer (%) | | Composition | Dᵥ50 (nm) | Relative dielectric constant | Mass proportion in first negative electrode active material layer (%) | | |
| Example 1 | / | / | / | / | 97:1:1:1:0 | Barium titanate (tetragonal crystal form) | 210 | 1610 | 3 | 94:1:1:1:3 | 10.2 |
| Example 2 | / | / | / | / | 97:1:1:1:0 | Barium titanate (tetragonal crystal form) | 405 | 1825 | 3 | 94:1:1:1:3 | 10.2 |
| Example 3 | / | / | / | / | 97:1:1:1:0 | Barium titanate (tetragonal crystal form) | 605 | 2027 | 3 | 94:1:1:1:3 | 10.2 |
| Example 4 | / | / | / | / | 97:1:1:1:0 | Barium titanate (tetragonal crystal form) | 820 | 2213 | 3 | 94:1:1:1:3 | 10.2 |
| Example 5 | / | / | / | / | 97:1:1:1:0 | Barium titanate (tetragonal crystal form) | 982 | 2632 | 3 | 94:1:1:1:3 | 10.2 |
| Example 6 | / | / | / | / | 97:1:1:1:0 | Barium titanate (tetragonal crystal form) | 1520 | 3026 | 3 | 94:1:1:1:3 | 10.2 |
| Example 7 | / | / | / | / | 97:1:1:1:0 | Barium titanate (tetragonal crystal form) | 1982 | 4515 | 3 | 94:1:1:1:3 | 10.2 |
| Example 8 | / | / | / | / | 97:1:1:1:0 | Barium titanate (tetragonal crystal form) | 820 | 2213 | 0.5 | 96.5:1:1:1:0. 5 | 10.2 |
| Example 9 | / | / | / | / | 97:1:1:1:0 | Barium titanate (tetragonal crystal form) | 820 | 2213 | 1 | 95.9:1:1:1:1. 1 | 10.2 |
| Example 10 | / | / | / | / | 97:1:1:1:0 | Barium titanate (tetragonal crystal form) | 820 | 2213 | 5 | 92:1:1:1:5 | 10.2 |
| Example 11 | / | / | / | / | 97:1:1:1:0 | Barium titanate (tetragonal crystal form) | 820 | 2213 | 10 | 87:1:1:1:10 | 10.2 |
| Example 12 | / | / | / | / | 97:1:1:1:0 | Barium titanate (tetragonal crystal form) | 820 | 2213 | 3 | 94:1:1:1:3 | 2.3 |
| Example 13 | / | / | / | / | 97:1:1:1:0 | Barium titanate (tetragonal crystal form) | 820 | 2213 | 3 | 94:1:1:1:3 | 8.2 |
| Example 14 | / | / | / | / | 97:1:1:1:0 | Barium titanate (tetragonal crystal form) | 820 | 2213 | 3 | 94:1:1:1:3 | 12.7 |
| Example 15 | / | / | / | / | 97:1:1:1:0 | Barium titanate (tetragonal crystal form) | 820 | 2213 | 3 | 94:1:1:1:3 | 19.8 |
| Example 16 | / | / | / | / | 97:1:1:1:0 | Lithium niobate | 820 | 2007 | 3 | 94:1:1:1:3 | 10.2 |
| Example 17 | / | / | / | / | 97:1:1:1:0 | Lead titanate | 820 | 2105 | 3 | 94:1:1:1:3 | 10.2 |
| Example 18 | Barium titanate (tetragonal crystal form) | 820 | 2213 | 0.2 | 97.8:1:1:0.2 | Barium titanate (tetragonal crystal form) | 820 | 2213 | 3 | 94:1:1:1:3 | 10.2 |
| Example 19 | Barium titanate (tetragonal crystal form) | 820 | 2213 | 1 | 97:1:1:1 | Barium titanate (tetragonal crystal form) | 820 | 2213 | 3 | 94:1:1:1:3 | 10.2 |
| Example 20 | / | / | / | / | 97:1:1:1:0 | Barium titanate (tetragonal crystal form) | 820 | 2213 | 3 | 94:1:1:1:3 | 10.2 |
| Comparativ e Example 1 | / | / | / | / | 98:1:1:0 | Barium titanate (hexagonal crystal form) | 101 | 817 | 3 | 94:1:1:1:3 | 10.2 |
| Comparativ e Example 2 | / | / | / | / | 98:1:1:0 | Barium titanate (tetragonal crystal form) | 2530 | 4803 | 3 | 94:1:1:1:3 | 10.2 |
| Comparativ e Example 3 | / | / | / | / | 98:1:1:0 | Barium titanate (tetragonal crystal form) | 820 | 2213 | 0.2 | 96.8:1:1:1:0. 2 | 10.2 |
| Comparativ e Example 4 | / | / | / | / | 98:1:1:0 | Barium titanate (tetragonal crystal form) | 820 | 2213 | 13 | 84:1:1:1:13 | 10.2 |
| Comparativ e Example 5 | / | / | / | / | 98:1:1:0 | / | / | / | / | 97:1:1:1:0 | 10.2 |

The lithium precipitation situations and cycling performance of the batteries of Examples 1 to 20 and Comparative Examples 1 to 5 were characterized, and the characterization results are shown in Table 3.

### (1) Test for lithium precipitation situation on negative electrode sheet:

The battery was charged to 4.4 V at 4C, left standing for 5 min, then discharged to 2.8 V at 1C, and left standing for 5 min. This charge-discharge process was cycled 500 times. Then, the negative electrode sheet was disassembled; a surface of a corner region of the disassembled negative electrode sheet was scanned under vacuum using electron back-scattered diffraction (EBSD) (where a scanning angle of a scanning electron microscope (Scanning Electron Microscopy, SEM) used was 70 degrees); and a lithium precipitation area signal of a corner region and a non-lithium precipitation area signal in the corner region were collected separately, where lithium precipitation area proportion in corner region = intensity of lithium precipitation area signal in corner region / (intensity of lithium precipitation area signal in corner region + intensity of non-lithium precipitation area signal in corner region).

### (2) Cycling performance test:

At 25°C, the battery was charged at a constant current at a rate of 4C to a cutoff voltage of 4 V and then discharged at a rate of 1C to a cutoff voltage of 2.8 V; an initial capacity was recorded as C₀; then, the battery was charged according to the strategy shown in Table 2, and discharged at a rate of 1C; a discharge capacity Cₙ for each cycle was recorded; and the number of cycles was recorded when a capacity retention rate of the battery (capacity retention rate = Cₙ / C₀ × 100%) reached 80%. A larger number of cycles indicates better cycling performance of the secondary battery.

**Table 2**

| State of charge SOC of secondary battery | Charging rate (C) |
|---|---|
| 0-3% | 2 |
| 3%-20% | 5.2 |
| 20%-30% | 4.5 |
| 30%-40% | 4.2 |
| 40%-50% | 3.3 |
| 50%-60% | 2.6 |
| 60%-70% | 2.0 |
| 70%-80% | 1.5 |
| 80%-97% | 0.33 |

FIG. 12 is a photograph of a negative electrode sheet disassembled from the battery obtained in Example 1 after cycling (cycling was performed 300 times according to the cycling conditions of the above cycling performance test), and FIG. 13 is a photograph of a negative electrode sheet disassembled from the battery obtained in Comparative Example 5 after cycling (cycling was performed 300 times according to the cycling conditions of the above cycling performance test). According to the comparison between FIG. 12 and FIG. 13, no lithium dendrites were generated on the surface of the corner region of the negative electrode sheet disassembled from the battery obtained in Example 1 after cycling, whereas obvious lithium dendrites were present on the surface of the corner region of the negative electrode sheet disassembled from the battery obtained in Comparative Example 5 after cycling. This indicates that adding dielectric material particles having a volume-based mean particle size of 210 nm, a mass proportion of 3% in the first negative electrode active material layer, and a relative dielectric constant of 1610 to the first negative electrode active material layer in the corner region in Example 1 can reduce the risk of formation of metal dendrites caused by aggregation on the surface of the corner region.

**Table 3**

| | Battery performance | |
|---|---|---|
| | Lithium precipitation area proportion in corner region of negative electrode sheet (%) | Cycling performance (cycles) |
| Example 1 | 6.6 | 2412 |
| Example 2 | 6 | 2441 |
| Example 3 | 2 | 2493 |
| Example 4 | 0 | 2633 |
| Example 5 | 2 | 2491 |
| Example 6 | 6 | 2431 |
| Example 7 | 8 | 2403 |
| Example 8 | 6 | 2433 |
| Example 9 | 2 | 2486 |
| Example 10 | 2.8 | 2450 |
| Example 11 | 3.2 | 2421 |
| Example 12 | 1.5 | 2492 |
| Example 13 | 0.2 | 2613 |
| Example 14 | 0.4 | 2581 |
| Example 15 | 15 | 2203 |
| Example 16 | 2.3 | 2465 |
| Example 17 | 2.2 | 2471 |
| Example 18 | 0 | 2617 |
| Example 19 | 0 | 2621 |
| Example 20 | 2.2 | 2703 |
| Comparative Example 1 | 40 | 2191 |
| Comparative Example 2 | 55 | 2103 |
| Comparative Example 3 | 65 | 1986 |
| Comparative Example 4 | 68 | 1907 |
| Comparative Example 5 | 70 | 1876 |

In conclusion, as compared to Comparative Examples 1 to 5, in the batteries of Examples 1 to 20, the volume-based mean particle size Dᵥ50 of the first dielectric material particles in the first negative electrode active material layer of the corner region of the negative electrode sheet is 200 nm to 2000 nm, and based on the total mass of the first negative electrode active material layer, the proportion of the first dielectric material particles is 0.5% to 10%. In the battery of Comparative Example 1, the volume-based mean particle size Dᵥ50 of the first dielectric material in the first negative electrode active material layer of the corner region of the negative electrode sheet is 101 nm, the relative dielectric constant is 817, and based on the total mass of the first negative electrode active material layer, the proportion of the first dielectric material particles is 3%; in the battery of Comparative Example 2, the volume-based mean particle size Dᵥ50 of the first dielectric material in the first negative electrode active material layer of the corner region of the negative electrode sheet is 2530 nm, the relative dielectric constant is 4803, and based on the total mass of the first negative electrode active material layer, the proportion of the first dielectric material particles is 3%; in the battery of Comparative Example 3, the volume-based mean particle size Dᵥ50 of the first dielectric material in the first negative electrode active material layer of the corner region of the negative electrode sheet is 820 nm, the relative dielectric constant is 2213, and based on the total mass of the first negative electrode active material layer, the proportion of the first dielectric material particles is 0.2%; in the battery of Comparative Example 4, the volume-based mean particle size Dᵥ50 of the first dielectric material in the first negative electrode active material layer of the corner region of the negative electrode sheet is 820 nm, the relative dielectric constant is 2213, and based on the total mass of the first negative electrode active material layer, the proportion of the first dielectric material particles is 13%; and in the battery of Comparative Example 5, no dielectric material particles are added to the first negative electrode active material layer of the negative electrode sheet. From Table 3, it can be seen that the lithium precipitation areas of the negative electrode sheets obtained after cycling and disassembly of the batteries of Examples 1 to 20 are significantly smaller than those of Comparative Examples 1 to 5, and the cycling performance of the batteries of Examples 1 to 20 is also better than that of Comparative Examples 1 to 5. This indicates that employing, in the first negative electrode active material layer on the corner region of the negative electrode sheet of this application, first dielectric material particles (the volume-based mean particle size Dᵥ50 of the first dielectric material particles is 200 nm to 2000 nm, the relative dielectric constant of the first dielectric material particles is 1000 to 10000, and based on the total mass of the first negative electrode active material layer, the proportion of the first dielectric material particles is 0.5% to 10%) can not only reduce the risk of lithium precipitation in the corner region of the negative electrode sheet, but also improve the cycling performance of the battery during fast charging.

It should be noted that this application is not limited to the above embodiments. The above embodiments are merely examples, and any embodiments having a configuration substantially identical to the technical idea and exhibiting the same effects within the scope of the technical solutions of this application are included in the technical scope of this application. In addition, within the scope not departing from the gist of this application, various modifications that can be conceived by those skilled in the art, and other forms formed by combining some constituent elements of the embodiments, are also included in the scope of this application.

## Claims

1. An electrode assembly, comprising a negative electrode sheet, wherein the negative electrode sheet comprises a corner region, the corner region comprises a first negative electrode active material layer, the first negative electrode active material layer comprises first dielectric material particles, a volume-based mean particle size Dᵥ50 of the first dielectric material particles is D₁, D₁ is 200 nm to 2000 nm, a relative dielectric constant of the first dielectric material particles is 1000 to 10000, and based on a total mass of the first negative electrode active material layer, a proportion of the first dielectric material particles is W₁, wherein W₁ is 0.5% to 10%.

2. The electrode assembly according to claim 1, wherein W₁ is 1% to 3%.

3. The electrode assembly according to claim 1 or 2, wherein D₁ is 600 nm to 1000 nm.

4. The electrode assembly according to any one of claims 1 to 3, wherein the relative dielectric constant of the first dielectric material particles is 1500 to 5000.

5. The electrode assembly according to any one of claims 1 to 4, wherein the first dielectric material particles comprise at least one of barium titanate, lead titanate, lithium niobate, lead zirconate titanate, lead metaniobate, or lithium barium lead niobate.

6. The electrode assembly according to claim 5, wherein the first dielectric material particles comprise doping ions, and the doping ions comprise at least one of trivalent rare earth metal ions, Nb⁵⁺, W⁵⁺, Mo⁵⁺, Al³⁺, Ga³⁺, Cr³⁺, Mn³⁺, Mg²⁺, Si⁴⁺, or Ca²⁺.

7. The electrode assembly according to any one of claims 1 to 6, wherein the first dielectric material particles comprise at least one of barium titanate doped with trivalent rare earth metal ions, barium titanate doped with pentavalent ions, lead titanate doped with pentavalent ions, or lead zirconate titanate doped with pentavalent ions.

8. The electrode assembly according to claim 6 or 7, wherein the trivalent rare earth metal ions comprise at least one of Sc³⁺, Y³⁺, or Yb³⁺.

9. The electrode assembly according to any one of claims 1 to 8, wherein a BET specific surface area of the first dielectric material particles is 0.8 m²/g to 7 m²/g.

10. The electrode assembly according to any one of claims 5 to 7, wherein the barium titanate comprises a tetragonal crystal form.

11. The electrode assembly according to any one of claims 1 to 10, wherein the first negative electrode active material layer further comprises a first negative electrode active material, a volume-based mean particle size Dᵥ50 of the first negative electrode active material is D₂, and D₁ ≤ D₂.

12. The electrode assembly according to claim 11, wherein D₂ is 2 µm to 20 µm.

13. The electrode assembly according to claim 11 or 12, wherein D₂ is 8 µm to 13 µm.

14. The electrode assembly according to any one of claims 1 to 13, wherein a length of the corner region is 5 mm to 30 mm.

15. The electrode assembly according to any one of claims 1 to 14, wherein the negative electrode sheet further comprises a straight region, the corner region is provided at two ends of the straight region, the straight region is provided with a second negative electrode active material layer, the second negative electrode active material layer comprises second dielectric material particles, and based on a total mass of the second negative electrode active material layer, a proportion of the second dielectric material particles is W₂, wherein W₁ ≥ W₂.

16. The electrode assembly according to claim 15, wherein W₂ is 0 to 5%.

17. The electrode assembly according to claim 15 or 16, wherein based on the total mass of the first negative electrode active material layer, a mass proportion of the first negative electrode active material is K₁; and
the second negative electrode active material layer comprises a second negative electrode active material, and based on the total mass of the second negative electrode active material layer, a mass proportion of the second negative electrode active material is K₂, wherein K₁ ≤ K₂.

18. The electrode assembly according to claim 17, wherein K₁ is 90% to 98%.

19. The electrode assembly according to claim 17 or 18, wherein K₂ is 90% to 98%.

20. The electrode assembly according to claim 15, wherein the negative electrode sheet further comprises a negative electrode current collector and a third negative electrode active material layer; the third negative electrode active material layer is provided on at least one side of the negative electrode current collector; and the first negative electrode active material layer and the second negative electrode active material layer are provided on a side of the third negative electrode active material layer away from the negative electrode current collector.

21. The electrode assembly according to claim 20, wherein a thickness of the first negative electrode active material layer is H₁, a thickness of the third negative electrode active material layer is H₃, and H₁/H₃ is 4% to 30%.

22. The electrode assembly according to claim 20 or 21, wherein a thickness of the first negative electrode active material layer is not greater than a thickness of the second negative electrode active material layer.

23. The electrode assembly according to any one of claims 20 to 22, wherein one or more of the following conditions are satisfied:
a thickness of the first negative electrode active material layer is 20 µm to 100 µm;
a thickness of the second negative electrode active material layer is 20 µm to 100 µm; and
a thickness of the third negative electrode active material layer is 40 µm to 200 µm.

24. The electrode assembly according to claim 17, wherein at least a portion of a surface of the first negative electrode active material is provided with a first coating layer, and the first coating layer comprises the first dielectric material particles; and/or
at least a portion of a surface of the second negative electrode active material is provided with a second coating layer, and the second coating layer comprises the second dielectric material particles.

25. The electrode assembly according to claim 20, wherein the first negative electrode active material, the second negative electrode active material, and a third negative electrode active material in the third negative electrode active material layer each independently comprise at least one of artificial graphite, natural graphite, soft carbon, hard carbon, a silicon-based material, a tin-based material, or titanate.

26. A preparation method of an electrode assembly, comprising:
stacking a positive electrode sheet and a negative electrode sheet, followed by winding along a winding direction to form the electrode assembly, wherein the negative electrode sheet comprises a corner region, the corner region comprises a first negative electrode active material layer, the first negative electrode active material layer comprises first dielectric material particles, a volume-based mean particle size Dᵥ50 of the first dielectric material particles being D₁, D₁ is 200 nm to 2000 nm, a relative dielectric constant of the first dielectric material particles is 1000 to 10000, and based on a total mass of the first negative electrode active material layer, a proportion of the first dielectric material particles being W₁, wherein W₁ is 0.5% to 10%.

27. A battery cell, comprising the electrode assembly according to any one of claims 1 to 25 or an electrode assembly obtained by the method according to claim 26.

28. A battery, comprising the electrode assembly according to any one of claims 1 to 25, or an electrode assembly obtained by the method according to claim 26, or the battery cell according to claim 27.

29. The battery according to claim 28, wherein the battery comprises a lithiumion battery or a sodium-ion battery.

30. An electric apparatus, comprising the battery according to claim 28 or 29.
